Europäisches Patentamt

European Patent Office

Office européen des brevets

(19)

(11) Numéro de publication : **0 052 548**
**B1**

(12) **FASCICULE DE BREVET EUROPÉEN**

(45) Date de publication du fascicule du brevet :
18.09.85

(51) Int. Cl.⁴ : **C 01 B 17/92**

(21) Numéro de dépôt : **81401742.2**

(22) Date de dépôt : **30.10.81**

(54) **Purification des acides sulfuriques résiduaires provenant de la synthèse des alcools.**

(30) Priorité : **13.11.80 FR 8024108**

(43) Date de publication de la demande :
**26.05.82 Bulletin 82/21**

(45) Mention de la délivrance du brevet :
**18.09.85 Bulletin 85/38**

(84) Etats contractants désignés :
**BE DE FR GB IT LU NL**

(56) Documents cités :
**FR-A- 765 639**
**FR-A- 816 186**
**FR-A- 1 223 678**
**FR-A- 2 267 980**
**GB-A- 387 569**
**GB-A- 672 723**
**US-A- 2 390 316**
**US-A- 2 955 920**

(73) Titulaire : **ATOCHEM**
**12/16, allée des Vosges**
**F-92400 Courbevoie (FR)**

(72) Inventeur : **Laviron, Charles**
**27 A, rue Soeur Bouvier**
**F-69005 Lyon (FR)**
Inventeur : **Lecouls, Henri**
**7, avenue Beauregard**
**F-69230 Saint-Genis Laval (FR)**

(74) Mandataire : **Rochet, Michel et al**
**ATOCHEM Département Propriété Industrielle Cedex 22**
**F-92091 Paris la Défense (FR)**

Description

La synthèse des alcools à partir des hydrocarbures éthyléniques est une réaction bien connue, étudiée en particulier par F. Vachez dans un article paru dans la Revue de l'Institut Français du Pétrole, XVIII, n° 5, pp. 724-758. L'hydrocarbure est absorbé dans un acide sulfurique dont la concentration varie en sens inverse du nombre d'atomes de carbone de l'hydrocarbure utilisé. Après hydrolyse de l'hydrocarbure et distillation de l'alcool obtenu, il reste un acide sulfurique dilué contenant des matières organiques dissoutes.

L'économie du procédé implique une concentration et un recyclage de cet acide. Cependant, au cours de ces opérations, les matières organiques dissoutes s'accumulent et forment des goudrons qui finissent par se déposer en obstruant les canalisations, ce qui oblige à des arrêts de fabrication pour des nettoyages longs et coûteux. De nombreuses solutions ont été proposées pour éviter cet inconvénient. En particulier, l'US-A-2 955 920 et la DE-B-1 074 019 préconisent l'oxydation totale des matières organiques par de l'acide nitrique en excès. Ces techniques éliminent effectivement les matières hydrocarbonées, mais conduisent à l'obtention d'un acide sulfurique contenant de l'acide nitrique et de l'acide nitrique et de l'acide nitreux qu'il est nécessaire d'éliminer avant le recyclage, élimination obtenue par chauffage à 300-320 °C. Cette opération supplémentaire assez onéreuse oblige à concentrer l'acide sulfurique à 96-98 %, concentration qui n'est pas nécessaire pour les hydrocarbures éthyléniques dont le nombre d'atomes de carbone est supérieur à 2, et produit des gaz d'évent chargés en oxydes d'azote toxiques qui doivent impérativement être éliminés avant rejet. Le FR-A 2 267 980 décrit un procédé de purification de l'acide résiduaire contenant du carbone dissous sous forme de matières organiques selon lequel on ajoute de l'acide nitrique à une température supérieure à 150 °C. Cependant, selon ce procédé, l'acide sulfurique obtenu et les gaz d'évent doivent subir un traitement supplémentaire, car ils contiennent des oxydes d'azote toxiques.

La demanderesse a mis au point un procédé de purification de l'acide sulfurique résiduaire qui permet d'éviter l'accumulation des matières organiques qui y sont dissoutes et nécessite qu'une étape de traitement de l'acide, les gaz d'évent pouvant quant à eux être rejetés directement, car non toxiques.

Le procédé de l'invention consiste à introduire en continu et simultanément dans un premier réacteur l'acide sulfurique préalablement concentré à un minimum de 70 % et de l'acide nitrique concentré à 60 % minimum de HNO₃, ledit acide étant introduit à une température minimale de 150 °C. L'acide nitrique est introduit à raison de 0,5 à 1 molécule d'acide nitrique par atome de carbone dissous sous forme de matières organiques dans l'acide sulfurique à purifier et le liquide ainsi obtenu est transvasé en continu par débordement dans un deuxième réacteur maintenu ou non à la même température que le premier, mais de toute façon à une température supérieure à 150 °C et non alimenté en acide nitrique. Dans le deuxième réacteur les matières organiques résiduelles achèvent de consommer la totalité de l'acide nitrique introduit et de l'acide nitreux formé après réaction. Les gaz d'évent ne contiennen comme oxyde d'azote que du protoxyde d'azote N₂O non toxique et peuvent être rejetés directement sans purification. Le temps de réaction total peut varier dans de grandes proportions suivant la température du traitement ; il est par exemple de l'ordre de 4 heures lorsqu'on opère à 160 °C. Il est possible d'utiliser un nombre plus important de réacteurs en série, mais il est nécessaire que le dernier réacteur ne reçoive plus d'ajout d'acide nitrique.

L'acide sulfurique ainsi purifié peut être recyclé directement à l'absorption d'hydrocarbures éthyléniques.

Ce procédé peut s'appliquer à d'autres acides résiduaires contenant des matières organiques, tels par exemple ceux provenant de la purification des hydrocarbures dans les opérations de raffinage.

Les exemples suivants illustrent l'invention sans toutefois la limiter.

Exemple 1

On dispose de deux réacteurs de deux litres munis d'une agitation et d'un chauffage et disposés en série.

Le premier réacteur reçoit par des tubes plongeants séparés l'acide sulfurique à traiter et l'acide nitrique qui sont introduits par des pompes doseuses. Il déborde par trop-plein dans le second réacteur qui se déverse lui aussi par trop-plein dans une recette.

Chaque réacteur est surmonté d'un condenseur à reflux qui rétrograde les vapeurs entraînées et stabilise la température des gaz. Les évents des deux réacteurs sont reliés entre eux et envoyés vers un chromatographe qui permet de les analyser puis vers un compteur qui en mesure le débit.

Dans le premier réacteur on introduit simultanément et en continu 800 g/h d'acide sulfurique à 75 % à traiter, contenant 0,78 % de carbone dissous sous forme de matières organiques, et 49,5 g/h d'acide nitrique à 61 %, ce qui correspond à un rapport molaire acide nitrique rapporté au carbone de 0,92. La température des réacteurs est maintenue à 160 °C. A la sortie du second réacteur on recueille 829 g/h d'acide sulfurique traité ne contenant plus que 0,26 % de carbone à l'état de matières organiques et ne contenant ni acide nitrique ni acide nitreux. Cet acide sulfurique peut être recyclé soit tel quel, soit après concentration dans un procédé d'hydratation d'hydrocarbure éthylénique. Les gaz d'évent qui ont un débit de 14 l/h ne contiennent comme oxyde d'azote que du protoxyde d'azote N₂O non toxique.

## Exemple 2

Dans le même appareillage que celui de l'exemple 1, on alimente en continu et simultanément 830 g/h d'acide sulfurique 75 %, contenant 0,78 % de carbone sous forme de matières organiques et 56,1 g/h d'acide nitrique 61 %, soit un rapport molaire acide nitrique rapporté au carbone de 1. La température est maintenue à 160 °C. Par l'écoulement du second réacteur on recueille 850 g/h d'acide sulfurique traité contenant 0,20 % de carbone sous forme de matières organiques et ne contenant ni acide nitrique ni acide nitreux. Le seul oxyde d'azote présent dans les gaz d'évent est le protoxyde d'azote N₂O non toxique. L'acide obtenu est recyclable tel quel dans le procédé d'hydratation des éthyléniques.

## Exemple 3

Dans le même appareillage que celui de l'exemple 1, on introduit simultanément et en continu 1 980 g/h d'acide sulfurique 75 % contenant 1,05 % de carbone sous forme de matières organiques et 109,8 g/h d'acide nitrique 61 %, soit un rapport molaire acide nitrique rapporté au carbone de 0,61. La température est maintenue à 160 °C. Au débordement du second réacteur on recueille 2 043 g/h d'acide traité titrant 0,38 % de carbone sous forme de matières organiques et ne contenant ni acide nitrique ni acide nitreux. Par l'évent se dégagent 45,4 l/h de gaz ne contenant comme oxyde d'azote que du protoxyde d'azote N₂O non toxique. L'acide obtenu est recyclable tel quel ou après concentration au titre souhaité.

## Exemple 4

Dans le même appareillage que celui de l'exemple 1, on introduit simultanément et en continu 1 500 g/h d'acide sulfurique 77 % titrant 0,15 % de carbone sous forme de matières organiques et 13,4 g/h d'acide nitrique 61 %, soit un rapport molaire acide nitrique rapporté au carbone de 0,7. La température des réacteurs est de 160 °C. Au débordement du second réacteur on recueille 1 510 g/h d'acide traité contenant 0,06 % de carbone sous forme de matières organiques. Il ne contient pas de quantité mesurable d'acide nitrique et nitreux. Les gaz d'évent ne contiennent comme oxyde d'azote que du protoxyde d'azote N₂O non toxique. L'acide obtenu peut être recyclé tel quel ou après concentration pour l'hydratation des oléfines.

Les exemples qui suivent sont destinés à montrer que si les conditions de l'invention ne sont pas respectées on retrouve les inconvénients des procédés antérieurs.

## Exemple 5

Dans le même appareillage que celui de l'exemple 1, on introduit en continu et simultanément 800 g/h d'acide sulfurique 75 % contenant 1,34 % de carbone sous forme de matières organiques et 117,7 g/h d'acide nitrique 61 %, soit un rapport molaire acide nitrique rapporté au carbone de 1,22. La température est maintenue à 160 °C. Par débordement du second réacteur on recueille 896 g/h d'acide traité contenant 0,35 % de carbone sous forme de matières organiques. Il ne contient pas d'acide nitrique ou nitreux. En revanche le gaz d'évent, d'un débit de 28,5 l/g contient 16,5 % d'oxyde azotique NO et est fortement coloré en rouge ce qui indique la présence du peroxyde d'azote NO₂ ou (NO₂)₂, produit d'oxydation par l'air de l'oxyde azotique. L'acide est utilisable tel quel mais le gaz d'évent devra être traité avant rejet.

## Exemple 6

Dans le même appareillage que celui de l'exemple 1 on introduit en continu et simultanément 1 500 g/h d'acide sulfurique 77 % titrant 0,15 % de carbone sous forme de matières organiques et 13,25 g/h d'acide nitrique 61 %, soit un rapport molaire acide nitrique rapporté au carbone de 0,69. La température est de 105 °C. Au débordement du second réacteur on recueille 1 510 g/h d'acide traité contenant 0,12 % de carbone sous forme de matières organiques mais également 0,177 % d'acide nitreux et 0,012 % d'acide nitrique. Les gaz d'évent (2,16 l/h) sont colorés en rouge ce qui indique la présence de peroxyde d'azote NO₂ ou (NO₂)₂, donc aussi de NO. Dans ce cas, outre que le traitement est peu efficace en ce qui concerne l'élimination du carbone, l'acide obtenu et les gaz d'évent doivent subir un traitement supplémentaire.

## Revendication

Procédé de purification de l'acide sulfurique résiduaire provenant de la fabrication des alcools par hydratation des hydrocarbures éthyléniques correspondants selon lequel on introduit en continu et simultanément dans un premier réacteur l'acide sulfurique préalablement concentré à un minimum de 70 % et de l'acide nitrique concentré à 60 % minimum de HNO₃, ledit acide nitrique étant introduit à une température minimale de 150 °C, caractérisé par le fait que l'acide nitrique est introduit à raison de 0,5 à 1 molécule d'acide nitrique par atome de carbone dissous sous forme de matières organiques dans l'acide sulfurique à purifier et que le liquide ainsi obtenu est transvasé en continu dans un deuxième réacteur maintenu à une température supérieure à 150 °C et non alimenté en acide nitrique.

## Claim

Process for the purification of residual sulphuric acid from the manufacture of alcohols by hydration of the corresponding ethylenic hydrocarbons, according to which the sulphuric acid, previously concentrated to a minimum of 70 %, and concentrated nitric acid with a minimum of 60 % of HNO₃ are added continuously and simultaneously to a first reactor, the said nitric acid being added at a minimum temperature of 150 °C, characterised in that the nitric acid is added in a proportion of 0.5 to 1 molecule of nitric acid per atom of carbon dissolved in the form of organic matter in the sulphuric acid to be purified and that the liquid thus obtained is continuously decanted into a second reactor maintained at a temperature above 150 °C and not supplied with nitric acid.

**Patentanspruch**

Verfahren zur Reinigung von Rückstandsschwefelsäure aus der Herstellung von Alkoholen durch Hydratation der entsprechenden ethylenischen Kohlenwasserstoffe, bei dem man kontinuierlich und gleichzeitig in einen ersten Reaktor Schwefelsäure, die zuvor auf mindestens 70 % konzentriert wurde, und Salpetersäure einer Konzentration von mindestens 60 % HNO₃ einsetzt, wobei die Salpetersäure bei einer Temperatur von mindestens 150 °C eingesetzt wird, dadurch gekennzeichnet, daß die Salpetersäure in einer Menge von 0,5 bis 1 Molekül Salpetersäure pro Atom Kohlenstoff, der in Form von organischem Material in der zu reinigenden Schwefelsäure gelöst ist, zugegeben wird und daß die so erhaltene Flüssigkeit kontinuierlich in einen zweiten Reaktor umgefüllt wird, der bei einer Temperatur über 150 °C gehalten und nicht mit Salpetersäure beschickt wird.